# EUROPEAN PATENT SPECIFICATION

(11) **EP 2 940 058 B1**
(45) Date of publication and mention of the grant of the patent: **30.03.2022**
(21) Application number: 13868125.9
(22) Date of filing: 31.12.2013
(51) Int. Cl.: C09J 7/00

(54) **CROSS-LINKED POLYMER, POLYMER RESIN COMPOSITION, AND POLYMER FILM**
VERNETZTES POLYMER, POLYMERHARZZUSAMMENSETZUNG UND POLYMERFILM
POLYMÈRE RÉTICULÉ, COMPOSITION DE RÉSINE POLYMÈRE ET FILM POLYMÈRE

(30) Priority: 31.12.2012 KR 20120158572
(43) Date of publication of application: 04.11.2015
(73) Proprietor: Kolon Industries, Inc., Seoul 07793 (KR)
(72) Inventor: CHO, Hong-Chan, Yongin-si Gyeonggi-do 446-797 (KR); KIM, Yu-Hyun, Yongin-si Gyeonggi-do 446-797 (KR); BAEG, Bae-Hyun, Yongin-si Gyeonggi-do 446-797 (KR)
(74) Representative: Ter Meer Steinmeister & Partner
(86) International application number: PCT/KR2013/012434
(87) International publication number: WO 2014/104864

(56) References cited:
- EP-A1- 2 258 770
- DE-A1- 2 632 120
- JP-B2- 4 435 253
- KR-A- 20080 093 056
- KR-A- 20110 110 024
- KR-A- 20120 078 640

## Description

### TECHNICAL FIELD

The present invention relates to a polymer resin composition as defined in claim 1 and a polymer film for an inner liner as defined in claim 12.

### BACKGROUND OF THE INVENTION

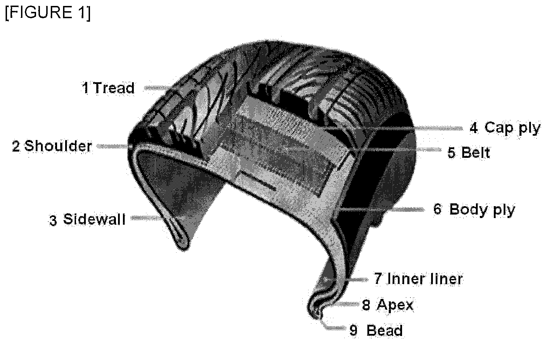

A tire withstands a weight of an automobile, reduces impact from a road, and transfers driving force or braking force of the automobile to the ground. In general, the tire is a complex of fiber/steel/rubber, and has a structure as shown in FIG. 1.

Tread (1): a part contacting the road. It should afford frictional force required for driving, have good wear resistance, withstand external impact, and have low heat generation.

Body ply, or carcass (6): a cord layer in the tire. It should support weight, withstand impact, and have high fatigue resistance to bending and stretching while driving.

Belt (5): located between body plies, consists of steel wire in most cases, reduces external impact, and maintains the ground surface of the tread to be wide to afford excellent driving stability.

Side wall (3): a rubber layer between a part below a shoulder (2) and a bead (9). It protects the inner body ply (6).

Inner liner (7): located inside the tire instead of a tube, and prevents air leakage to enable a pneumatic tire.

Bead (9): square or hexagonal wire bundle formed of rubber-coated steel wire. It positions and fixes the tire to a rim.

Cap ply (4): a special cord located on a belt of a radial tire for some cars. It minimizes movement of the belt during driving.

Apex (8): triangular rubber filler used to minimize dispersion of the bead, reduce external impact to protect the bead, and prevent air inflow during forming.

Recently, a tubeless tire where high pressure air of about 30 to 40 psi is injected without using a tube has been commonly used, and to prevent inner air from being leaked to the outside during automobile driving, an inner liner having a high gas barrier property is disposed in an inner layer of the carcass.

Previously, an inner liner including rubber ingredients such as butyl rubber, halobutyl rubber, and the like having relatively low air permeability as main components was used, but to achieve a sufficient gas barrier property of the inner liner, a rubber content or inner liner thickness was required to be increased. However, if the content of the rubber components and the tire thickness are increased, there are problems in that total weight of the tire is increased and mileage of an automobile is deteriorated.

Further, since the rubber ingredients have relatively low heat resistance, air pockets may be generated between rubber in an inner surface of a carcass layer and the inner liner, or a shape or physical properties of the inner liner may be changed in a vulcanization process of a tire or in an automobile driving process during which repeated deformations occur at a high temperature. In addition, in order to bond the rubber ingredients to the carcass layer of a tire, a vulcanizer should be used or a vulcanization process should be applied, but sufficient adhesion may not be secured therewith.

Therefore, various methods have been suggested to decrease the thickness and weight of the inner liner to increase mileage and reduce changes in the shape or physical properties of the inner liner during a process of forming a tire or driving, and the like. However, previously known methods have limitations in maintaining excellent air permeability and formability of a tire while sufficiently decreasing the thickness and weight of the inner liner. In addition, the inner liner manufactured by the previously known method exhibited physical property degradation or generated cracks and the like in a tire manufacturing process during which repeated deformations occur at a high temperature, or in an automobile driving process during which repeated deformations occur and high heat is generated.

EP 2 258 770 A1 discloses in its examples the manufacture of compositions which can be used in the manufacture of tyres, wherein the compositions comprise a polyamide-12 block and a polyether block.

### DETAILED DESCRIPTION OF THE INVENTION

### TECHNICAL OBJECTIVES

It is an object of the invention to provide a cross-linked polymer having excellent mechanical physical properties together with high elasticity and low modulus properties.

In addition, it is another object of the invention to provide a polymer resin composition capable of providing an inner liner film implementing an excellent gas barrier property even with a thin thickness to lighten a tire weight, improve mileage of automobiles, and have excellent formability and mechanical physical properties.

Further, it is an object of the invention to provide a polymer film for an inner liner implementing an excellent gas barrier property even with a thin thickness to lighten a tire weight, improve mileage of automobiles, and have excellent formability and mechanical physical properties.

### TECHNICAL SOLUTIONS

The technical solutions provided by the present invention relate to a polymer resin composition as defined in claim 1 and a polymer film for an inner liner as defined in claim 12. Incidentally, the present disclosure provides the following:
A cross-linked polymer including polyamide-based segments having a specific structure and polyether-based segments having a specific structure is provided, wherein the polyamide-based segments are bound to the polyether-based segment via a residue of an aromatic compound including at least one amine group and at least one carboxylic group.

A polymer resin composition for manufacturing an inner liner film is provided, including the cross-linked polymer as described above and a polyamide-based resin having relative viscosity of 2.5 to 4. with respect to 96 % sulfuric acid solution.

A polymer film for an inner liner is provided, including a base film layer including a melt-extrusion of the polymer resin composition as described above.

Hereinafter, the cross-linked polymer, the polymer resin composition, and the polymer film for an inner liner according to specific embodiments will be described in more detail.

In the present specification, the 'cross-linked polymer' refers to a polymer including one or more kinds of cross-linked polymer(s) or cross-linked compound(s) or a polymer including one or more kinds of cross-linked repeat unit(s) or cross-linked segment(s).

In addition, the 'segment' refers to a part which congregates while having the same chemical structure in the polymer or the compound or a specific part having the same physical properties. For example, the segment may be a specific repeat unit, a chemical structure in which specific repeat units congregate, or a part or a residue derived from reaction materials (a monomer, an oligomer, a polymer, and the like) included in a final reaction product.

In addition, the 'residue' refers to a form or a chemical structure in which a reaction material of a chemical reaction is included in the final product, for example, a chemical structure, a functional group, a repeat unit derived from the reaction material, and the like.

According to an embodiment, a cross-linked polymer is provided, including: polyamide-based segments including repeat units of the following Chemical Formula 1 or Chemical Formula 2; and polyether-based segments including repeat units of the following Chemical Formula 3, wherein the polyamide-based segment is bound to the polyether-based segment via a residue of an aromatic compound including at least one amine group and at least one carboxylic group.

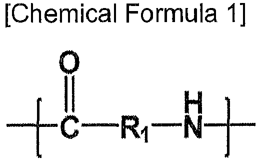

In Chemical Formula 1, R₁ is a C1-C20 linear or branched alkylene group, a C6-C20 arylene group, or a C7-C20 linear or branched arylalkylene group.

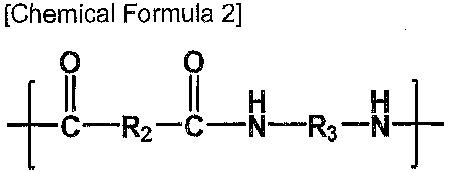

In Chemical Formula 2, R₂ is a C1-C20 linear or branched alkylene group, and R₃ is a C1-C20 linear or branched alkylene group, a C6-C20 arylene group, or a C7-C20 linear or branched arylalkylene group.

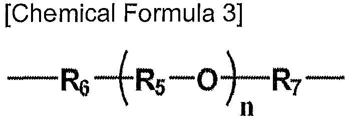

In Chemical Formula 3, R₅ is a C1-C10 linear or branched alkylene group, n is an integer of 1 to 100, and R₆ and R₇ may be the same as or different from each other, and are a direct bond, -O-, -NH-, -COO-, or -CONH-, respectively.

The present inventors conducted research into a material of an inner liner film, synthesized a novel cross-linked polymer capable of solving problems of rubber components such as butyl rubber, halobutyl rubber, and the like, which were previously used, and having excellent mechanical physical properties together with high elasticity and low modulus properties even under conditions of low temperature, high temperature, and the like, as well as room temperature, and completed the present invention.

The cross-linked polymer may be differentiated from rubber-based components previously used as a material of the inner liner film or thermoplastic resins. When the cross-linked polymer is used, additional additive or rubber components for improving physical properties of the inner liner are not largely required, such that a manufacturing process may be simplified and cost for manufacturing a tire may be reduced.

In particular, the cross-linked polymer is characterized in that the polyamide-based segment is bound to the polyether-based segment via a residue of the above-described aromatic compound, and due to the chemically structural characteristic, when the cross-linked polymer is applied to the inner liner, a high gas barrier property, excellent formability and elasticity, high mechanical physical properties, durability, and the like, may be implemented.

Specifically, due to the unique molecular chain characteristic, the polyamide-based segment may exhibit an excellent gas barrier property, for example, a gas barrier property of about five to fifty times higher than that of butyl rubber that is generally used for a tire at the same thickness, and exhibit a modulus property which is not significantly higher as compared to other resins.

In addition, the polyether-based segment may allow the cross-linked polymer to have a low modulus property or to decrease load generated during an elongation process. In addition, even after a specific heat treatment process, physical properties of the film may not be significantly changed to inhibit a structural change according to crystallization, and the like, of the inner liner film, thereby improving durability against tire deformation.

The polyamide-based segment may include repeat units of Chemical Formula 1 or Chemical Formula 2.

In Chemical Formula 1, R₁ is a C3-C8 linear or branched alkylene group, and in Chemical Formula 2, R₂ is a C3-C8 linear or branched alkylene group and R₃ is a C3-C8 linear or branched alkylene group.

The polyether-based segment may include repeat units of Chemical Formula 3. In Chemical Formula 3, R₅ is a C1-C5 linear or branched alkylene group.

A weight average molecular weight of the cross-linked polymer is not particularly limited. However, in order for the inner liner film to be manufactured by using the cross-linked polymer alone or mixing the cross-linked polymer with other components to have excellent physical properties, the weight average molecular weight is preferably 50,000 to 500,000, or 70,000 to 300,000.

In a case in which the weight average molecular weight of the cross-linked polymer is excessively small, it may be difficult for the inner liner film to be manufactured by using the cross-linked polymer alone or mixing the cross-linked polymer with other components to secure sufficient mechanical physical properties or the gas barrier property. In a case in which the weight average molecular weight of the cross-linked polymer is excessively large, when the inner liner film to be manufactured by using the cross-linked polymer alone or mixing the cross-linked polymer with other components is heated at a high temperature, a modulus or degree of crystallization may be excessively increased, such that it may be difficult to secure elasticity or elastic recovery that is required of the inner liner film.

Meanwhile, the aromatic compound including at least one amine group and at least one carboxylic group may mediate cross-linking bonds between the polyamide-based segments including repeat units of Chemical Formula 1 or Chemical Formula 2, and the polyether-based segments including repeat units of Chemical Formula 3.

As the aromatic compound including at least one amine group and at least one carboxylic group may mediate the cross-linking bonds between the polyamide-based segments and the polyether-based segments, an amide structure included in a main chain may be additionally formed to improve stability among chains, and due to an aromatic functional group in the aromatic compound, physical properties such as tensile strength and the like of the cross-linked polymer may be improved.

The aromatic compound including at least one amine group and at least one carboxylic group may include a C6-C20 arene compound including 1 to 5 amine groups and 1 to 5 carboxylic acids.

In addition, the aromatic compound including at least one amine group and at least one carboxylic group may form a cross-linkage between the polyamide-based segments and the polyether-based segments in a process of forming the cross-linked polymer, and accordingly, at least two amine groups or carboxylic groups to be included or substituted in the aromatic compound may be bound to the polyamide-based segment and the polyether-based segment, respectively.

That is, the residue of the aromatic compound including at least one amine group and at least one carboxylic group may include a functional group of the following Chemical Formula 4.

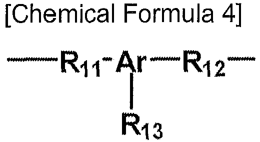

In Chemical Formula 4, Ar is a C6-C20 aromatic ring compound, R₁₁ and R₁₂ are each independently -NH- or 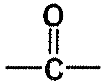 , and R₁₃ is -NH-, 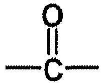 , -NH₂, or -COOH.

A specific chemical structure of the cross-linked polymer may be one in which the polyamide-based segment is bound to the polyether-based segment via one functional group selected from the group consisting of the following Chemical Formulas 5 to 7.

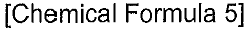

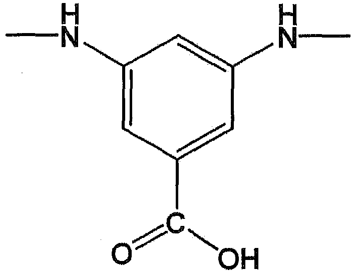

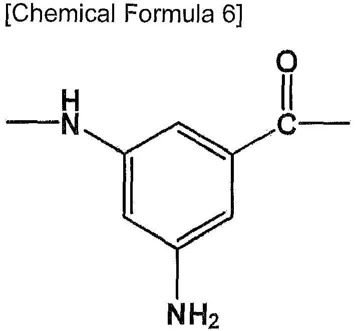

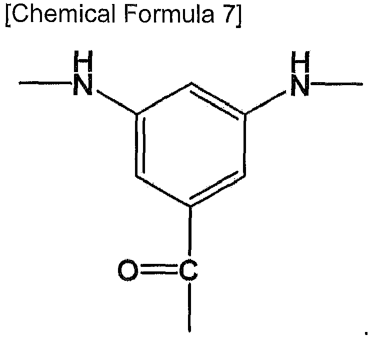

The residue of the aromatic compound including at least one amine group and at least one carboxylic group in the cross-linked polymer may have a content of 100 ppmw to 10,000 ppmw, or 300 ppmw to 5000 ppmw. When the content of the aromatic compound including at least one amine group and at least one carboxylic group is excessively small, the polyamide-based segments and the polyether-based segments may not be sufficiently bound to each other in the cross-linked polymer. In addition, when the content of the aromatic compound including at least one amine group and at least one carboxylic group is excessively large, physical properties of the cross-linked polymer may be deteriorated.

A weight ratio between the polyamide-based segments and the polyether-based segments in the cross-linked polymer is not particularly limited. However, in order for the inner liner film to be manufactured by using the cross-linked polymer alone or mixing the cross-linked polymer with other components to have excellent physical properties, it is preferable that the cross-linked polymer includes the polyamide-based segments and the polyether-based segments at a weight ratio of 9:1 to 2:8, or a weight ratio of 8:2 to 3:7, or a weight ratio of 6:4 to 3:7.

When the content of the polyether-based segment in the cross-linked polymer is excessively small, formability of the inner liner film to be manufactured by using the cross-linked polymer alone or mixing the cross-linked polymer with other components may be deteriorated, or physical properties of the inner liner film according to repeated deformation may be significantly deteriorated. In addition, when the content of the polyether-based segment in the cross-linked polymer is excessively large, the gas barrier property of the inner liner film to be manufactured by using the cross-linked polymer alone or mixing the cross-linked polymer with other components may be deteriorated, and elasticity of the inner liner film may be excessive, such that it may not be easy to bind the inner liner film to the tire at a uniform thickness.

The cross-linked polymer may further include additives such as a heat-resistant agent, and the like, that are usable in a manufacturing process. For example, the cross-linked polymer may include the heat-resistant agent in a content of 100 ppmw to 10,000 ppmw, or 500 ppmw to 5000 ppmw.

According to another embodiment, there is a polymer resin composition for manufacturing an inner liner film, including the cross-linked polymer as described above, and a polyamide-based resin having relative viscosity of 2.5 to 4.0 with respect to 96 % sulfuric acid solution.

The present inventors found through experiments that when the polyamide-based resin is used together with the above-described cross-linked polymer, the inner liner film capable of implementing an excellent gas barrier property even with a thin thickness to lighten a tire weight, improve mileage of automobiles, have high heat resistance, and exhibit mechanical physical properties such as high durability, high fatigue resistance, and the like, together with excellent formability may be provided, and completed the present invention.

In addition, in a polymer resin film generally used for the inner liner film, viscoelasticity is obtained or an elastic recovery property is not excessively high. Meanwhile, the inner liner film to be manufactured by using the polymer resin composition may exhibit an excellent elastic behavior or shape recovery property. Accordingly, the inner liner film to be manufactured by using the polymer resin composition may have high durability and excellent shape stability against deformation occurring while automobile driving, and the like, and may minimize problems caused by difference in elastic behavior with other constitution parts such as carcass, and the like, for example, a phenomenon that a wrinkle or crack occurs on the film or a phenomenon that physical properties, adhesion, or the like, are deteriorated. Specifically, the above-described characteristic of the inner liner film is obtained by mixing the polyamide-based resin with the cross-linked polymer to be used.

Specific description of the cross-linked polymer includes the above-description of the cross-linked polymer according to an exemplary embodiment.

The polymer resin composition may include the polyamide-based resin having relative viscosity of 2.5 to 4.0, or 3.0 to 3.5 with respect to 96 % sulfuric acid solution.

The polyamide-based resin may have relative viscosity of 2.5 to 4.0, or 3.0 to 3.5, and preferably, 3.2 to 3.4 with respect to 96 % sulfuric acid solution. When viscosity of the polyamide-based resin is less than 2.5, sufficient elongation may not be secured due to deterioration of toughness, such that at the time of manufacturing the tire or at the time of driving an automobile, the inner liner film may be damaged, and it may be difficult to secure physical properties such as the gas barrier property, formability, and the like, that are required of the inner liner film. In addition, when viscosity of the polyamide-based resin is more than 4.0, the viscosity of the inner liner film to be manufactured may be unnecessarily high, and the inner liner may have difficulty in terms of appropriate formability or elasticity.

A relative viscosity of the polyamide-based resin refers to a relative viscosity measured using a 96 % sulfuric acid solution at room temperature. Specifically, a specimen of a predetermined polyamide-based resin (for example, a 0.025 g specimen) is dissolved in a 96 % sulfuric acid solution at various concentrations to prepare two or more solutions for measurement (for example, 3 solutions for measurement are prepared by dissolving the polyamide-based resin specimen in 96 % sulfuric acid so as to have concentrations of 0.25 g/dL, 0.10 g/dL, and 0.05 g/dL, respectively), and then the relative viscosity of the solutions for measurement (for example, a ratio of an average passing time of the solutions for measurement to a passing time of the 96 % sulfuric acid solution through a viscosity tube) may be obtained by using a viscosity tube at 25 °C.

Specific examples of the polyamide-based resin may include nylon 6, nylon 66, nylon 46, nylon 11, nylon 12, nylon 610, nylon 612, a nylon 6/66 copolymer, a nylon 6/66/610 copolymer, nylon MXD6, nylon 6T, a nylon 6/6T copolymer, a nylon 66/PP copolymer, and a nylon 66/PPS copolymer; or an N-alkoxy alkylate thereof, for example, methoxy methylate of 6-nylon, methoxy methylate of 6-610-nylon, or methoxy methylate of 612-nylon. In addition, in order to secure appropriate physical properties as an inner liner, nylon 6, nylon 66, nylon 46, nylon 11, nylon 12, nylon 610, or nylon 612 may be preferable as the polyamide-based resin.

The polymer resin composition may be formed into an inner liner film by melting and extruding processes. Further, in the inner liner film to be manufactured as described above, the cross-linked polymer and the polyamide-based resin may be uniformly mixed with each other, or may be bound to each other in a partial area or an entire area through a polymerization reaction or a cross-linking reaction.

When a content of the polyether-based segment included in the cross-linked polymer in the polymer resin composition is 2 to 40 wt%, preferably 3 to 35 wt%, and more preferably 4 to 30 wt% based on total weight of the resin composition, the inner liner film to be manufactured may exhibit excellent physical properties and performance.

When the content of the polyether-based segment is less than 2 wt% based on the total weight of the resin composition, the modulus of the inner liner film to be manufactured may be increased, such that formability of the tire may be deteriorated or physical properties according to repeated deformation may be significantly deteriorated, and elasticity or elastic recovery of the base film layer may be deteriorated. In addition, when the content of the polyether-based segment is more than 40 wt% based on the total weight of the resin composition, the gas barrier property required for the inner liner may not be good to deteriorate tire performance, and to deteriorate reactivity to an adhesive, such that it may be difficult for the inner liner to be easily adhered to a carcass layer, and it may not be easy to manufacture a uniform film since elasticity of the inner liner is increased.

A mixing ratio between the polyamide-based resin and the cross-linked polymer is not particularly limited. However, in order for the inner liner film to be manufactured to exhibit excellent physical properties and performance, the polymer resin composition may include the polyamide-based resin and the cross-linked polymer at a weight ratio of 8:2 to 3:7, or 6:4 to 4:6.

When a content of the polyamide-based resin is excessively small in the polymer resin composition, the density or gas barrier property of the inner liner film may be deteriorated. In addition, when the content of the polyamide-based resin is excessively large in the polymer resin composition, the modulus of the inner liner film may be excessively increased or formability of the tire may be deteriorated, and the polyamide-based resin may be crystallized under a high temperature environment in the process of manufacturing the tire or in the process of driving an automobile, and cracks may occur due to repeated deformation.

The polymer resin composition may further include a random or block copolymer including polyamide-based segments and polyether-based segments, in addition to the above-described polyamide-based resin and the above-described cross-linked polymer.

Specifically, the polymer resin composition may further include a random or block copolymer including polyamide-based segments including repeat units of the following Chemical Formula 11 or Chemical Formula 12; and polyether-based segments including repeat units of the following Chemical Formula 13.

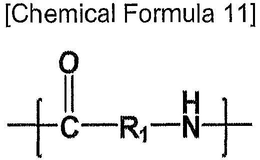

In Chemical Formula 11, R₁ is a C1-C20 linear or branched alkylene group, a C6-C20 arylene group, or a C7-C20 linear or branched arylalkylene group.

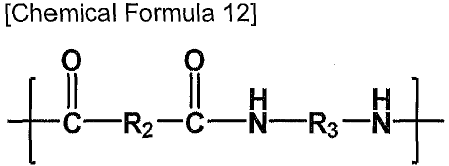

In Chemical Formula 12, R₂ is a C1-C20 linear or branched alkylene group, and R₃ is a C1-C20 linear or branched alkylene group, a C6-C20 arylene group, or a C7-C20 linear or branched arylalkylene group.

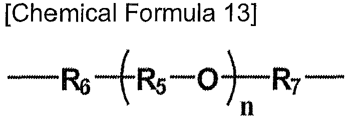

In Chemical Formula 13, R₅ is a C1-C10 linear or branched alkylene group, n is an integer of 1 to 100, and R₆ and R₇ may be the same as or different from each other, and are a direct bond, -O-, -NH-, -COO-, or -CONH-, respectively.

The random or block copolymer may have a weight average molecular weight of 50,000 to 300,000.

According to another embodiment, a polymer film for an inner liner is provided, including a base film layer including a melt-extrusion of the polymer resin composition as described above.

As described above, the polymer film for an inner liner including the base film layer manufactured by melting and extruding the polymer resin composition including the cross-linked polymer and the polyamide-based resin may implement an excellent gas barrier property even with a thin thickness to lighten a tire weight, improve mileage of automobiles, have high heat resistance, and exhibit mechanical physical properties such as high durability, high fatigue resistance, and the like, together with excellent formability.

The base film layer may be formed by melting and extruding the polymer resin composition at 230 °C to 300 °C. A temperature for melting the polymer resin composition may be 230 to 300 °C, preferably 240 to 280 °C. The melting temperature needs to be higher than a melting point of a polyamide-based compound. However, if the melting temperature is excessively high, carbonization or decomposition may occur to lower physical properties of a film, binding between the polyether-based resins may occur, or orientation may be generated in a fiber arrangement direction, which may be unfavorable for manufacturing an unstretched film.

In a step of forming the base film layer, an extrusion die which is known to be usable for extruding a polymer resin may be used without specific limitations, but a T-type die may be preferably used so that a thickness of a base film may become more uniform or orientation may not be generated in the base film.

In the step of forming the base film layer, the polymer resin composition may be extruded to be a film having a thickness of 30 µm to 300 µm. The thickness of the film to be manufactured may be controlled by controlling extrusion conditions, for example, a discharge rate of an extruder or a gap of an extrusion die, or changing a winding speed of the extrusion in a cooling process or a recovery process.

The base film layer may have a thickness of 30 µm to 300 µm.

In order to control the thickness of the base film layer more uniformly in the range of 30 µm to 300 µm, the die gap of the extrusion die may be controlled to be 0.3 mm to 1.5 mm. In the step of forming the base film, if the die gap is excessively small, die shear pressure and shear stress in a melt-extrusion process may become excessively high, and thus it is difficult to form a uniform shape of the film to be extruded and productivity may be lowered. Further, if the die gap is excessively large, stretching of the film to be melt-extruded may largely occur to generate orientation, and a difference between a property in a longitudinal direction and a property in a transverse direction of the base film to be manufactured may become increased.

Furthermore, in the step of forming the base film layer, the thickness of the base film manufactured by the above-described steps may be continuously measured, and according to feedback of the measurement result, a part of the extrusion die where a non-uniform thickness appears, for example, a lip gap adjustment bolt of a T-die, may be controlled to reduce deviation of the base film to be manufactured, thereby obtaining a film having a more uniform thickness. In addition, the film thickness measurement-feedback-extrusion die control may be configured as an automated process step by using an automated system, for example an Auto Die system, and the like.

Meanwhile, the step of forming the base film layer may further include a step of solidifying a product obtained by the melting and extruding process in a cooling part maintained at a temperature of 5 °C to 40 °C, preferably 10 °C to 30 °C. By solidifying a sheet-shaped product formed by the melting and extruding process in the cooling part maintained at a temperature of 5 °C to 40 °C, a film shape having more uniform thickness may be provided. If the base film layer obtained by the melting and extruding process is folded or attached to the cooling part maintained at an appropriate temperature, stretching may not substantially occur, and the base film layer may be provided as an unstretched film. Specifically, the solidifying step may include uniformly attaching the base film layer formed by the melting and extruding process to a cooling roll maintained at a temperature of 5 °C to 40 °C using an air knife, an air nozzle, an electrostatic charging device (a pinning device), or a combination thereof.

In the solidifying step, by attaching the base film layer formed by the melting and extruding process to the cooling roll using an air knife, an air nozzle, an electrostatic charging device (a pinning device), or a combination thereof, blowing in the air of the base film layer or partially non-uniform cooling of the base film layer, and the like, after extrusion may be prevented, and thus a film having a more uniform thickness may be formed, and partial areas having a relatively thick or thin thickness compared to surrounding parts in the film may not be substantially formed.

A molten material extruded under specific die gap conditions may be attached or folded to a cooling roll installed at a horizontal distance of 10 mm to 150 mm, preferably 20 mm to 120 mm, from the die outlet, to eliminate stretching and orientation. The horizontal distance from the die outlet to the cooling roll may be a distance between the die outlet and a point where a discharged molten material is folded to the cooling roll.

If a linear distance between the die outlet and the point at which a molten film is attached to the cooling roll is excessively small, uniform flow of melt extruded resin may be disturbed and the film may be non-uniformly cooled, and if the distance is excessively large, an effect of inhibiting film stretching may not be achieved.

In the step of forming the base film, except for the above-described steps and conditions, film extrusion conditions commonly used for manufacturing a polymer film, for example, a screw diameter, a screw rotation speed, a line speed, and the like may be appropriately selected.

Meanwhile, the polymer film for an inner liner may further include an adhesive layer formed on at least one surface of the base film layer and including a resorcinol-formalin-latex (RFL)-based adhesive. The resorcinol-formalin-latex (RFL)-based adhesive may include 2 wt% to 32 wt%, preferably 10 wt% to 20 wt% of a condensate of resorcinol and formaldehyde, and 68 wt% to 98 wt%, preferably 80 wt% to 90 wt% of latex.

The condensate of resorcinol and formaldehyde may be obtained by mixing resorcinol and formaldehyde at a molar ratio of 1:0.3 to 1:3.0, preferably 1:0.5 to 1:2.5, and conducting a condensation reaction. In addition, the condensate of resorcinol and formaldehyde may be included in a content of 2 wt% or more based on total weight of the adhesive layer in terms of a chemical reaction for excellent adhesion, and it may be included in a content of 32 wt% or less to secure adequate fatigue resistance.

The latex may be a mixture containing one or more kinds selected from the group consisting of natural rubber latex, styrene/butadiene rubber latex, acrylonitrile/butadiene rubber latex, chloroprene rubber latex, and styrene/butadiene/vinylpyridine rubber latex. The latex may be included in a content of 68 wt% or more based on total weight of the adhesive layer for flexibility and an effective cross-linking reaction with rubber, and it may be included in a content of 98 wt% or less for a chemical reaction with a base film and stiffness of the adhesive layer.

Meanwhile, the resorcinol-formalin-latex (RFL)-based adhesive may be applied on at least one surface of the base film layer at a thickness of 0.1 to 20 µm to form the adhesive layer. The adhesive layer including the resorcinol-formalin-latex (RFL)-based adhesive may be formed by applying the resorcinol-formalin-latex (RFL)-based adhesive on one surface of the base film layer, or may be formed by laminating an adhesive film including the resorcinol-formalin-latex (RFL)-based adhesive on one surface of the base film layer.

A step of forming the adhesive layer may be performed by coating the resorcinol-formalin-latex (RFL)-based adhesive on one surface or both surfaces of the base film layer as formed above, and then performing a drying process. The formed adhesive layer may have a thickness of 0.1 µm to 20 µm, preferably 0.1 µm to 10 µm. The resorcinol-formalin-latex (RFL)-based adhesive may include 2 wt% to 32 wt% of a condensate of resorcinol and formaldehyde, and 68 wt% to 98 wt%, preferably 80 wt% to 90 wt%, of latex. The details of the resorcinol-formalin-latex (RFL)-based adhesive with the above specific composition are as described above.

A commonly used applying or coating method or apparatus may be used to apply the adhesive without specific limitations, but a knife coating method, a bar coating method, a gravure coating method, a spray method, or an immersion method may be used.

However, knife coating, gravure coating, or bar coating may be preferable for uniform application and coating of the adhesive.

After forming the adhesive layer on one surface or both surfaces of the base film, the drying process and an adhesive reaction may be simultaneously performed. However, in consideration of reactivity of the adhesive, a heat treatment reaction step may be separately performed after the drying process, and the step of forming the adhesive layer and the drying process and reacting process may be applied several times for a thickness of the adhesive layer or application of a multi-stage adhesive. In addition, after the adhesive is applied on the base film, the heat treatment reaction may be performed by solidification and reaction under heat treatment condition of 100 °C to 150 °C for approximately 30 seconds to 3 minutes.

### ADVANTAGEOUS EFFECT OF THE INVENTION

According to the present disclosure, a cross-linked polymer having excellent mechanical physical properties together with high elasticity and low modulus properties is provided to solve problems of rubber components such as butyl rubber, halobutyl rubber, and the like, which were previously used as materials of an inner liner film.

In addition, according to the present invention, a resin composition capable of providing an inner liner film implementing an excellent gas barrier property even with a thin thickness to lighten a tire weight, improve mileage of automobiles, and have excellent formability and mechanical physical properties, and a polymer film for an inner liner manufactured from the resin composition, are provided.

### BRIEF DESCRIPTION OF THE DRAWINGS

FIG. 1 schematically shows a structure of a pneumatic tire.

### DETAILED DESCRIPTION OF THE EMBODIMENTS

Specific embodiments of the invention will be explained in detail in the following examples.

### [Example 1: Synthesis of Cross-linked Polymer]

Caprolactam and an amine-terminated polyether resin (weight average molecular weight: 3000) were mixed at a weight ratio of 5:5, and adipic acid (1 mol as compared to caprolactam) and 3,5-diaminobenzoic acid (300 ppmw based on the mixture) were added thereto to thereby prepare a reaction product.

A temperature of the reaction product was sequentially raised up to 150 °C for 1 hour, raised up to 230 °C for 1 hour, and raised up to 250 °C for 2 hours. A pressure of a reactor in the process of sequentially raising the temperature was maintained to be a maximum atmospheric pressure of 8 to 10 bar.

In addition, from a time point at which the reaction temperature arrived at 250 °C, the temperature and pressure were maintained for 30 minutes, and then decompression was conducted in a vacuum state for 30 minutes. At a time point at which the decompression was completed, a heat-resistant agent (Iranox1098) was added in a content of 2000 ppmw based on the reaction product, followed by additional reaction at 250 °C for approximately 2 hours and 30 minutes to obtain a cross-linked polymer.

The synthesized cross-linked polymer had a weight average molecular weight of 77,000 (confirmed by GPC) and a melting viscosity (260 degrees on the basis of 500S/R) of 5058 poise.

### [Example 2: Synthesis of Cross-linked Polymer]

An amine-terminated polyethylene oxide resin (weight average molecular weight: approximately 2000) and adipic acid having the same number of moles as the polyethylene oxide resin were added to a reactor, and stirred at approximately 80 °C for approximately 2 hours at 30 to 100 rpm.

After the stirring was completed, caprolactam was added to the reaction product (a weight ratio between the caprolactam and polyethylene oxide resin = 8:2), water serving as an initiator was added in a content of 10 wt% based on the caprolactam, and a heat-resistant agent of a phenolic compound was added in a content of 3000 ppm based on the reaction product. Then, the temperature was raised up to 150 °C for 1 hour, and up to 230 °C for 1 hour, and up to 250 °C for 2 hours. A pressure of the reactor in the process of sequentially raising the temperature was maintained to be a maximum atmospheric pressure of 8 to 10 bar.

In addition, from a time point at which the reaction temperature arrived at 250 °C, the temperature and pressure were maintained for 30 minutes, and decompression was conducted in a vacuum state for 30 minutes. At a time point at which the decompression was completed, a secondary heat-resistant agent of a phosphorus compound was added in a content of approximately 2000 ppmw based on the reaction product, followed by additional reaction at 250 °C for approximately 2 hours and 30 minutes to obtain a cross-linked polymer.

It was confirmed that the synthesized cross-linked polymer had a weight average molecular weight of approximately 70,000 (confirmed by GPC) and a melting viscosity (260 degrees on the basis of 500S/R) of about 5500 poise.

### [Example 3: Manufacture of Inner Liner Film]

### (1) Manufacture of Base Film Layer

50 wt% of the cross-linked polymer obtained by Example 1 above and 50 wt% of a polyamide-based resin (Nylon 6) having relative viscosity of 3.3 (with respect to 96 % sulfuric acid solution) were mixed, extruded through a T-type die (die gap - 1.0 mm) at 260 °C while maintaining uniform flow of the molten resin, and the molten resin was cooled and solidified in a film shape having a uniform thickness on a surface of a cooling roll which was controlled to 25 °C by using an air knife. In addition, an unstretched base film having a thickness of 100 µm was obtained at a speed of 15 m/min without passing stretching and heat treatment sections.

### (2) Application of Adhesive

Resorcinol and formaldehyde were mixed at a mole ratio of 1:2, and then subjected to a condensation reaction to obtain a condensate of resorcinol and formaldehyde. 12 wt% of the condensate of resorcinol and formaldehyde and 88 wt% of styrene/butadiene-1,3/vinylpyridine latex were mixed to obtain a resorcinol-formalin-latex (RFL)-based adhesive having a concentration of 20 %.

In addition, the resorcinol-formalin-latex (RFL)-based adhesive was coated on the base film at a thickness of 1 µm by using a gravure coater, and dried and reacted at 150 °C for 1 minute to form an adhesive layer, thereby manufacturing an inner liner film.

### [Example 4: Manufacture of Inner Liner Film]

An inner liner film was manufactured by the same method as Example 3, except for using the cross-linked polymer obtained by Example 2 above.

### Experimental Example: Measurement of Physical Properties of Inner Liner Film

### Experimental Example 1: Measurement of Load Generated by Elongation

Loads generated at the time of stretching the inner liner films obtained by Examples 3 and 4 above, respectively, in a machine direction (MD) and a transverse direction (TD) at room temperature by 25 %, respectively, were measured at a constant rate of extension mode by using INSTRON equipment.

### Experimental Example 2: Measurement of Oxygen Permeability

Oxygen permeability of each of the inner liner films obtained by Examples 3 and 4 above was measured according to ASTM D 3895, using an oxygen permeation analyzer (Model 8000, Illinois Instruments Company) at 25 °C and a 50 RH% atmosphere.

### Experimental Example 3: Measurement of Impact Strength of Inner Liner Film

From the inner liner films obtained by Examples 3 and 4 above, respectively, specimens were manufactured according to ASTM D 6110, and impact strength of the specimens was measured by ZWICK HIT 5.5P. The measurement was repeated five times, and an average value was obtained from the obtained measurement results except for the maximum value and the minimum value, to determine impact strength of the inner liner film.

Results of Experimental Examples 1 to 3 are shown in Table 1 below.

**[Table 1]**

| | Load Generated at 25 % Elongation [Unit: MPa] | Elongation at Break [Unit: %] | Oxygen Permeability [Unit: cc/(m² · 24 h · atm)] | Impact Strength [Unit: KJ/m'] |
|---|---|---|---|---|
| Example 3 | 21 | 610 | 80 | 2500 |
| Example 4 | 23 | 605 | 75 | 2250 |

As shown in Table 1 above, it was confirmed that, according to the inner liner films obtained by Examples 3 and 4, a load which is not high was generated at 25 % elongation, such that high elasticity and low modulus properties were obtained, and high elongation at break and impact strength were exhibited to secure excellent mechanical physical properties.

Moreover, it was confirmed that the inner liner films obtained by Examples 3 and 4 above had oxygen permeability of 80 cc/(m² · 24 h · atm) or less to be capable of implementing excellent gas barrier property even with a thin thickness, thereby lightening a tire weight and improving mileage of automobiles.

## Claims

1. A polymer resin composition for manufacturing an inner liner film, which comprises:
a cross-linked polymer comprising polyamide-based segments including repeat units of the following Chemical Formula 1 or Chemical Formula 2 and polyether-based segments including repeat units of the following Chemical Formula 3
and
a polyamide-based resin having relative viscosity of 2.5 to 4.0 with respect to 96 % sulfuric acid solution,
wherein a content of the polyether-based segments included in the cross-linked polymer is 2 to 40 wt% based on total weight of the polymer resin composition, and
the polyamide-based segment is bound to the polyether-based segment via a residue of an aromatic compound including at least one amine group and at least one carboxylic group: 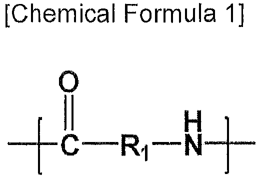
in Chemical Formula 1, R₁ is a C1-C20 linear or branched alkylene group, a C6-C20 arylene group, or a C7-C20 linear or branched arylalkylene group; 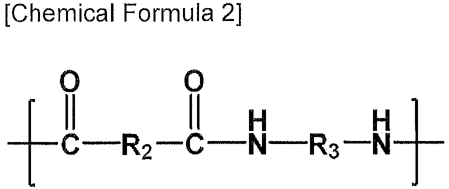
in Chemical Formula 2, R₂ is a C1-C20 linear or branched alkylene group, and R₃ is a C1-C20 linear or branched alkylene group, a C6-C20 arylene group, or a C7-C20 linear or branched arylalkylene group; and 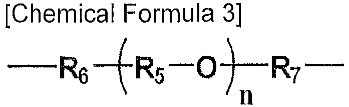
in Chemical Formula 3, R₅ is a C1-C10 linear or branched alkylene group, n is an integer of 1 to 100, and R₆ and R₇ may be the same as or different from each other, and are a direct bond, -O-, -NH-, -COO-, or -CONH-, respectively.

2. The polymer resin composition for manufacturing an inner liner film of claim 1,
wherein the cross-linked polymer has a weight average molecular weight of 50,000 to 500,000.

3. The polymer resin composition for manufacturing an inner liner film of claim 1, wherein:
in Chemical Formula 1, R₁ is a C3-C8 linear or branched alkylene group;
in Chemical Formula 2, R₂ is a C3-C8 linear or branched alkylene group, and R₃ is a C3-C8 linear or branched alkylene group; and
in Chemical Formula 3, R₅ is a C1-C5 linear or branched alkylene group.

4. The polymer resin composition for manufacturing an inner liner film of claim 1,
wherein the aromatic compound including at least one amine group and at least one carboxylic group includes a C6-C20 arene compound including 1 to 5 amine groups and 1 to 5 carboxylic acids.

5. The polymer resin composition for manufacturing an inner liner film of claim 1,
wherein the residue of the aromatic compound including at least one amine group and at least one carboxylic group including a functional group of Chemical Formula 4 below: 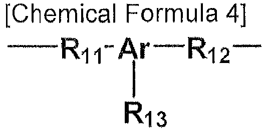
in Chemical Formula 4, Ar is a C6-C20 aromatic ring compound;
R₁₁ and R₁₂ are each independently -NH- or 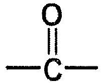 ; and
R₁₃ is -NH-, 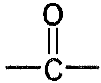 , -NH₂, or -COOH.

6. The polymer resin composition for manufacturing an inner liner film of claim 1,
wherein the polyamide-based segment is bound to the polyether-based segment via one functional group selected from the group consisting of Chemical Formulas 5 to 7 below:

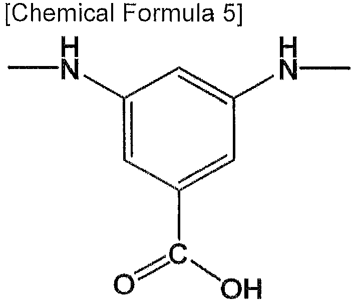

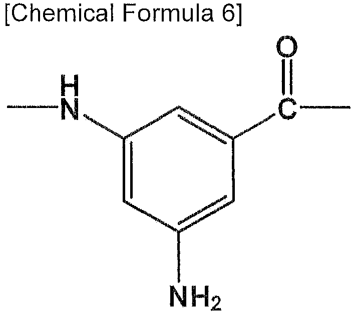

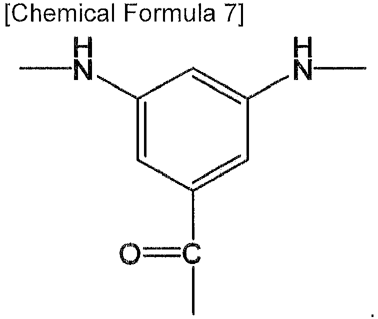

7. The polymer resin composition for manufacturing an inner liner film of claim 1,
wherein the cross-linked polymer includes the polyamide-based segments and the polyether-based segments at a weight ratio of 9:1 to 2:8.

8. The polymer resin composition for manufacturing an inner liner film of claim 1,
wherein the residue of the aromatic compound including at least one amine group and at least one carboxylic group has a content of 100 ppmw to 10,000 ppmw.

9. The polymer resin composition for manufacturing an inner liner film of claim 1, wherein
the polymer resin composition for manufacturing an inner liner film includes the polyamide-based resin and the cross-linking polymer at a weight ratio of 8:2 to 3:7.

10. The polymer resin composition for manufacturing an inner liner film of claim 1,
further comprising a random or block copolymer including polyamide-based segments including repeat units of Chemical Formula 11 or Chemical Formula 12, and polyether-based segments including repeat units of Chemical Formula 13 below: 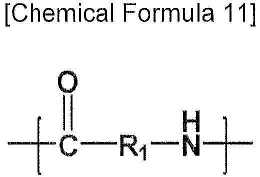
in Chemical Formula 11, R₁ is a C1-C20 linear or branched alkylene group, a C6-C20 arylene group, or a C7-C20 linear or branched arylalkylene group; 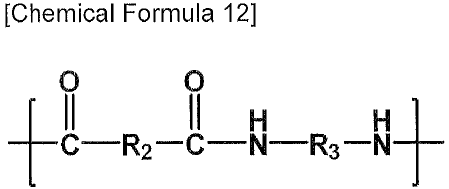
in Chemical Formula 12, R₂ is a C1-C20 linear or branched alkylene group, and R₃ is a C1-C20 linear or branched alkylene group, a C6-C20 arylene group, or a C7-C20 linear or branched arylalkylene group; and 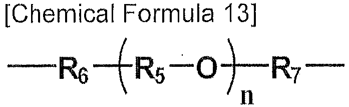
in Chemical Formula 13, R₅ is a C1-C10 linear or branched alkylene group, n is an integer of 1 to 100, and R₆ and R₇ may be the same as or different from each other, and are a direct bond, -O-, -NH-, -COO-, or -CONH-, respectively.

11. The polymer resin composition for manufacturing an inner liner film of claim 10,
wherein the random or block copolymer has a weight average molecular weight of 50,000 to 500,000.

12. A polymer film for an inner liner comprising a base film layer including a melt-extrusion of the polymer resin composition of claim 1.

13. The polymer film for an inner liner of claim 12, further comprising an adhesive layer formed on at least one surface of the base film layer and including a resorcinol-formalin-latex (RFL)-based adhesive.

14. The polymer film for an inner liner of claim 12,
wherein the base film layer has a thickness of 30 to 300 µm; and the adhesive layer has a thickness of 0.1 to 20 µm.

## Patentansprüche

1. Polymerharzzusammensetzung zum Herstellen eines Innenauskleidungsfilms, umfassend:
ein vernetztes Polymer, umfassend Segmente auf Polyamidbasis, die Wiederholungseinheiten der folgenden chemischen Formel 1 oder chemischen Formel 2 beinhalten, und Segmente auf Polyetherbasis, die Wiederholungseinheiten der folgenden chemischen Formel 3 beinhalten,
und
ein Harz auf Polyamidbasis mit einer relativen Viskosität von 2,5 bis 4,0 in Bezug auf eine 96%ige Schwefelsäurelösung,
wobei ein Gehalt der Segmente auf Polyetherbasis, die in dem vernetzten Polymer beinhaltet sind, 2 bis 40 Gew.-% bezogen auf das Gesamtgewicht der Polymerharzzusammensetzung beträgt und
das Segment auf Polyamidbasis an das Segment auf Polyetherbasis über einen Rest einer aromatischen Verbindung, die mindestens eine Amingruppe und mindestens eine Carboxylgruppe beinhaltet, gebunden ist: 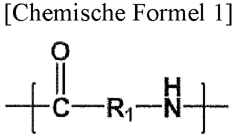
in der chemischen Formel 1 ist R₁ eine lineare oder verzweigte C1-C20-Alkylengruppe, eine C6-C20-Arylengruppe oder eine lineare oder verzweigte C7-C20-Arylalkylengruppe; 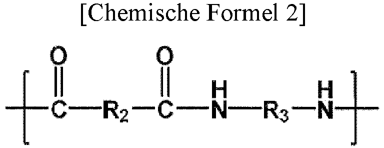
in der chemischen Formel 2 ist R₂ eine lineare oder verzweigte C1-C20-Alkylengruppe, und R₃ ist eine lineare oder verzweigte C1-C20-Alkylengruppe, eine C6-C20-Arylengruppe oder eine lineare oder verzweigte C7-C20-Arylalkylengruppe; und 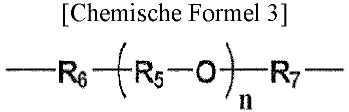
in der chemischen Formel 3 ist R₅ eine lineare oder verzweigte C1-C10-Alkylengruppe, n ist eine ganze Zahl von 1 bis 100 und R₆ und R₇ können gleich oder voneinander verschieden sein und sind eine direkte Bindung, -O-, -NH-, -COO- bzw. -CONH-.

2. Polymerharzzusammensetzung zum Herstellen eines Innenauskleidungsfilms nach Anspruch 1,
wobei das vernetzte Polymer ein gewichtsmittleres Molekulargewicht von 50.000 bis 500.000 aufweist.

3. Polymerharzzusammensetzung zum Herstellen eines Innenauskleidungsfilms nach Anspruch 1,
wobei:
in der chemischen Formel 1 R₁ eine lineare oder verzweigte C3-C8-Alkylengruppe ist;
in der chemischen Formel 2 R₂ eine lineare oder verzweigte C3-C8-Alkylengruppe ist und R₃ eine lineare oder verzweigte C3-C8-Alkylengruppe ist; und
in der chemischen Formel 3 R₅ eine lineare oder verzweigte C1-C5-Alkylengruppe ist.

4. Polymerharzzusammensetzung zum Herstellen eines Innenbeschichtungsfilms nach Anspruch 1,
wobei die aromatische Verbindung, die mindestens eine Amingruppe und mindestens eine Carboxylgruppe beinhaltet, eine C6-C20-Arenverbindung beinhaltet, die 1 bis 5 Amingruppen und 1 bis 5 Carbonsäuren beinhaltet.

5. Polymerharzzusammensetzung zum Herstellen eines Innenauskleidungsfilms nach Anspruch 1,
wobei der Rest der aromatischen Verbindung, die mindestens eine Amingruppe und mindestens eine Carboxylgruppe beinhaltet, eine funktionelle Gruppe der folgenden chemischen Formel 4 beinhaltet: 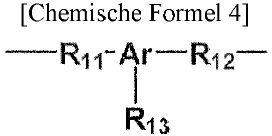
in der chemischen Formel 4 ist Ar eine aromatische C6-C20-Ringverbindung;
R₁₁ und R₁₂ sind jeweils unabhängig -NH- oder 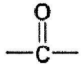 und
R₁₃ ist -NH-, 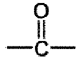 , -NH₂ oder -COOH.

6. Polymerharzzusammensetzung zum Herstellen eines Innenauskleidungsfilms nach Anspruch 1,
wobei das Segment auf Polyamidbasis über eine funktionelle Gruppe ausgewählt aus der Gruppe bestehend aus den folgenden chemischen Formeln 5 bis 7 an das Segment auf Polyetherbasis gebunden ist:

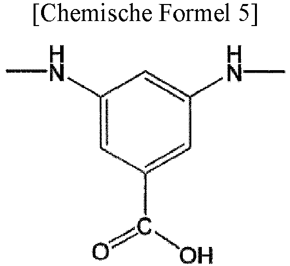

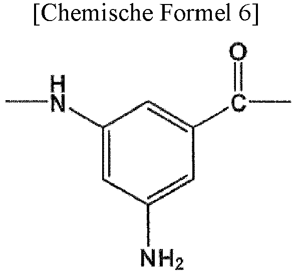

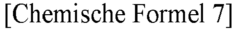

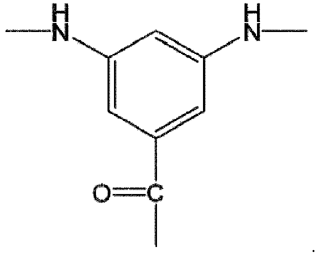

7. Polymerharzzusammensetzung zum Herstellen eines Innenauskleidungsfilms nach Anspruch 1,
wobei das vernetzte Polymer die Segmente auf Polyamidbasis und die Segmente auf Polyetherbasis in einem Gewichtsverhältnis von 9:1 bis 2:8 beinhaltet.

8. Polymerharzzusammensetzung zum Herstellen eines Innenauskleidungsfilms nach Anspruch 1,
wobei der Rest der aromatischen Verbindung, die mindestens eine Amingruppe und mindestens eine Carboxylgruppe beinhaltet, einen Gehalt von 100 Gew.-ppm bis 10.000 Gew.-ppm aufweist.

9. Polymerharzzusammensetzung zum Herstellen eines Innenauskleidungsfilms nach Anspruch 1,
wobei
die Polymerharzzusammensetzung zum Herstellen eines Innenauskleidungsfilms das Harz auf Polyamidbasis und das vernetzende Polymer in einem Gewichtsverhältnis von 8:2 bis 3:7 beinhaltet.

10. Polymerharzzusammensetzung zum Herstellen eines Innenauskleidungsfilms nach Anspruch 1,
ferner umfassend ein statistisches oder Blockcopolymer, das Segmente auf Polyamidbasis, die Wiederholungseinheiten der chemischen Formel 11 oder der chemischen Formel 12 beinhalten, und Segmente auf Polyetherbasis, die Wiederholungseinheiten der folgenden chemischen Formel 13 beinhalten, beinhaltet: 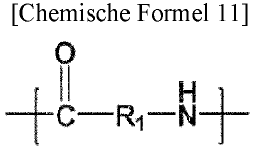
in der chemischen Formel 11 ist R₁ eine lineare oder verzweigte C1-C20-Alkylengruppe, eine C6-C20-Arylengruppe oder eine lineare oder verzweigte C7-C20-Arylalkylengruppe; 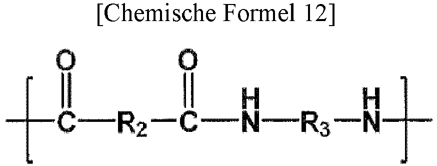
in der chemischen Formel 12 ist R₂ eine lineare oder verzweigte C1-C20-Alkylengruppe, und R₃ ist eine lineare oder verzweigte C1-C20-Alkylengruppe, eine C6-C20-Arylengruppe oder eine lineare oder verzweigte C7-C20-Arylalkylengruppe; und 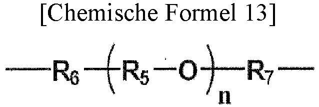
in der chemischen Formel 13 ist R₅ eine lineare oder verzweigte C1-C10-Alkylengruppe, n ist eine ganze Zahl von 1 bis 100 und R₅ und R₇ können gleich oder voneinander verschieden sein und sind eine direkte Bindung, -O-, -NH-, -COO- bzw. -CONH-.

11. Polymerharzzusammensetzung zum Herstellen eines Innenauskleidungsfilms nach Anspruch 10,
wobei das statistische oder Blockcopolymer ein gewichtsmittleres Molekulargewicht von 50.000 bis 500.000 aufweist.

12. Polymerfilm für eine Innenauskleidung, umfassend eine Basisfilmschicht, die eine Schmelzextrusion der Polymerharzzusammensetzung nach Anspruch 1 beinhaltet.

13. Polymerfilm für eine Innenauskleidung nach Anspruch 12, ferner umfassend eine Klebstoffschicht, die auf mindestens einer Oberfläche der Basisfilmschicht ausgebildet ist und einen Klebstoff auf Resorcin-Formalin-Latex(RFL)-Basis beinhaltet.

14. Polymerfilm für eine Innenauskleidung nach Anspruch 12,
wobei die Basisfilmschicht eine Dicke von 30 bis 300 µm aufweist und die Klebstoffschicht eine Dicke von 0,1 bis 20 µm aufweist.

## Revendications

1. Composition de résine polymère pour la préparation d'un film de revêtement intérieur, laquelle comprend :
un polymère réticulé comprenant des segments à base de polyamide incluant des motifs répétitifs de formule chimique 1 ou formule chimique 2 suivantes et des segments à base de polyéther incluant des motifs répétitifs de formule chimique 3 suivante,
et
une résine à base de polyamide présentant une viscosité relative de 2,5 à 4,0 par rapport à une solution d'acide sulfurique à 96 %,
dans laquelle une teneur en segments à base de polyéther inclus dans le polymère réticulé est de 2 à 40 % en poids sur la base du poids total de la composition de résine polymère, et
le segment à base de polyamide est lié au segment à base de polyéther via un résidu d'un composé aromatique incluant au moins un groupe amine et au moins un groupe carboxylique : 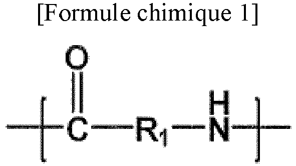
dans la formule chimique 1, R₁ est un groupe alkylène linéaire ou ramifié en C1 à C20, un groupe arylène en C6 à C20, ou un groupe arylalkylène linéaire ou ramifié en C7 à C20 ; 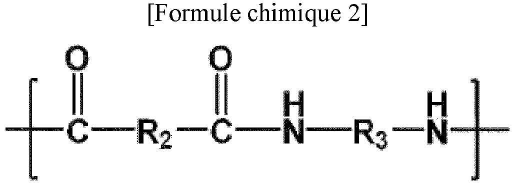
dans la formule chimique 2, R₂ est un groupe alkylène linéaire ou ramifié en C1 à C20, et R₃ est un groupe alkylène linéaire ou ramifié en C1 à C20, un groupe arylène en C6 à C20, ou un groupe arylalkylène linéaire ou ramifié en C7 à C20 ; et 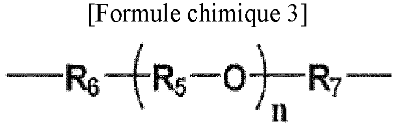
dans la formule chimique 3, R₅ est un groupe alkylène linéaire ou ramifié en C1 à C10, n est un nombre entier de 1 à 100, et R₆ et R₇ peuvent être identiques ou différents l'un de l'autre, et sont une liaison directe, -O-, -NH-, -COO-, ou -CONH-, respectivement.

2. Composition de résine polymère pour la préparation d'un film de revêtement intérieur selon la revendication 1,
dans laquelle le polymère réticulé présente un poids moléculaire moyen en poids de 50 000 à 500 000.

3. Composition de résine polymère pour la préparation d'un film de revêtement intérieur selon la revendication 1,
dans laquelle :
dans la formule chimique 1, R₁ est un groupe alkylène linéaire ou ramifié en C3 à C8 ;
dans la formule chimique 2, R₂ est un groupe alkylène linéaire ou ramifié en C3 à C8, et R₃ est un groupe alkylène linéaire ou ramifié en C3 à C8 ; et
dans la formule chimique 3, R₅ est un groupe alkylène linéaire ou ramifié en C1 à C5.

4. Composition de résine polymère pour la préparation d'un film de revêtement intérieur selon la revendication 1,
dans laquelle le composé aromatique incluant au moins un groupe amine et au moins un groupe carboxylique inclut un composé d'arène en C6 à C20 incluant 1 à 5 groupes amine et 1 à 5 acides carboxyliques.

5. Composition de résine polymère pour la préparation d'un film de revêtement intérieur selon la revendication 1,
dans laquelle le résidu du composé aromatique incluant au moins un groupe amine et au moins un groupe carboxylique incluant un groupe fonctionnel de formule chimique 4 ci-dessous : 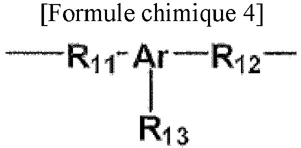
dans la formule chimique 4, Ar est un composé de cycle aromatique en C6 à C20 ;
R₁₁ et R₁₂ sont chacun indépendamment -NH- ou 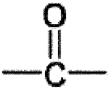 ; et
R₁₃ est -NH-, 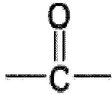 , -NH₂, ou -COOH.

6. Composition de résine polymère pour la préparation d'un film de revêtement intérieur selon la revendication 1,
dans laquelle le segment à base de polyamide est lié au segment à base de polyéther via un groupe fonctionnel sélectionné dans le groupe constitué des formules chimiques 5 à 7 ci-dessous :

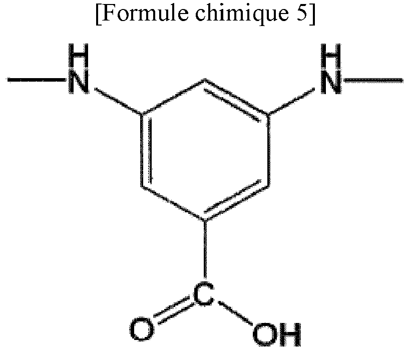

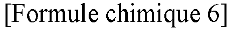

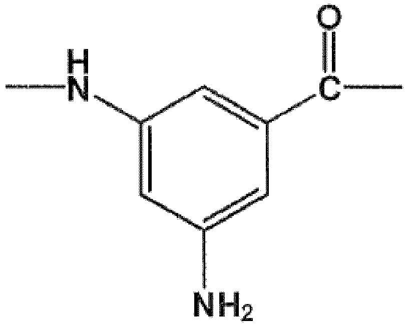

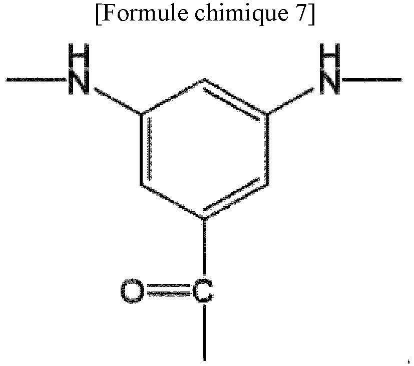

7. Composition de résine polymère pour la préparation d'un film de revêtement intérieur selon la revendication 1,
dans laquelle le polymère réticulé inclut les segments à base de polyamide et les segments à base de polyéther à un rapport en poids de 9 : 1 à 2 : 8.

8. Composition de résine polymère pour la préparation d'un film de revêtement intérieur selon la revendication 1,
dans laquelle le résidu du composé aromatique incluant au moins un groupe amine et au moins un groupe carboxylique présente une teneur de 100 ppm en poids à 10 000 ppm en poids.

9. Composition de résine polymère pour la préparation d'un film de revêtement intérieur selon la revendication 1, dans laquelle
la composition de résine polymère pour la préparation d'un film de revêtement intérieur inclut la résine à base de polyamide et le polymère de réticulation à un rapport en poids de 8 : 2 à 3 : 7.

10. Composition de résine polymère pour la préparation d'un film de revêtement intérieur selon la revendication 1,
comprenant en outre un copolymère statistique ou séquencé incluant des segments à base de polyamide incluant des motifs répétitifs de formule chimique 11 ou de formule chimique 12, et des segments à base de polyéther incluant des motifs répétitifs de formule chimique 13 ci-dessous : 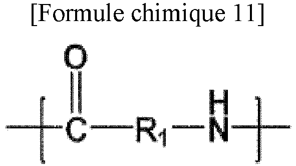
dans la formule chimique 11, R₁ est un groupe alkylène linéaire ou ramifié en C1 à C20, un groupe arylène en C6 à C20, ou un groupe arylalkylène linéaire ou ramifié en C7 à C20 ; 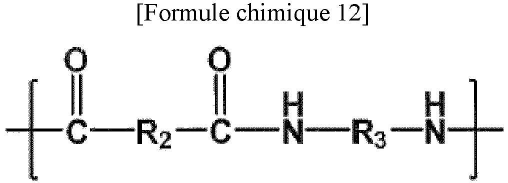
dans la formule chimique 12, R₂ est un groupe alkylène linéaire ou ramifié en C1 à C20, et R₃ est un groupe alkylène linéaire ou ramifié en C1 à C20, un groupe arylène en C6 à C20, ou un groupe arylalkylène linéaire ou ramifié en C7 à C20 ; et 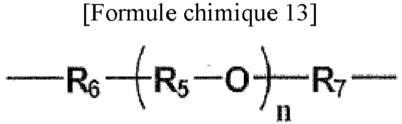
dans la formule chimique 13, R₅ est un groupe alkylène linéaire ou ramifié en C1 à C10, n est un nombre entier de 1 à 100, et R₆ et R₇ peuvent être identiques ou différents l'un de l'autre, et sont une liaison directe, -O-, -NH-, -COO-, ou -CONH-, respectivement.

11. Composition de résine polymère pour la préparation d'un film de revêtement intérieur selon la revendication 10,
dans laquelle le copolymère statistique ou séquencé présente un poids moléculaire moyen en poids de 50 000 à 500 000.

12. Film polymère pour un revêtement intérieur comprenant une couche de film de base incluant une extrusion à l'état fondu de la composition de résine polymère selon la revendication 1.

13. Film polymère pour un revêtement intérieur selon la revendication 12, comprenant en outre une couche adhésive formée sur au moins une surface de la couche de film de base et incluant un adhésif à base de résorcinol-formol-latex (RFL).

14. Film polymère pour un revêtement intérieur selon la revendication 12,
dans lequel la couche de film de base présente une épaisseur de 30 à 300 µm ; et la couche adhésive présente une épaisseur de 0,1 à 20 µm.
